Europäisches Patentamt

European Patent Office

Office européen des brevets

(19)

(11) **EP 0 961 132 A1**

(12)

# DEMANDE DE BREVET EUROPEEN

(43) Date de publication:
**01.12.1999 Bulletin 1999/48**

(51) Int Cl.⁶: **G01S 5/14**, G01S 5/12

(21) Numéro de dépôt: **99401211.0**

(22) Date de dépôt: **20.05.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **28.05.1998 FR 9806767**

(71) Demandeur: **ALCATEL**
**75008 Paris (FR)**

(72) Inventeurs:
• **Chenebault, Jean**
  **31830 Plaisance du Touch (FR)**

• **Lobert, Bruno**
  **31320 Castanet (FR)**
• **Journo, Stéphane**
  **31000 Toulouse (FR)**

(74) Mandataire: **El Manouni, Josiane et al**
**COMPAGNIE FINANCIERE ALCATEL**
**Dépt. Propr. Industrielle,**
**30, avenue Kléber**
**75116 Paris (FR)**

(54) **Positionnement par calcul de pseudo-vitesses dans un système de navigation par satellite**

(57)    L'invention concerne un procédé de localisation d'un récepteur dans un système de navigation comprenant une constellation de satellites en orbite basse émettant des signaux, comprenant les étapes de

-    mesure de pseudo-distances entre le récepteur et des satellites à partir des signaux reçus depuis les satellites;
-    mesure de pseudo-vitesses entre le récepteur et des satellites à partir des signaux reçus depuis les

satellites, grâce à l'effet Doppler, et
-    calcul de la position instantanée du récepteur à partir de la combinaison des mesures de pseudo-distances et de pseudo-vitesses.

Le calcul de la position du récepteur s'effectue en minimisant la matrice de covariance des pseudo-distances et des pseudo-vitesses mesurées.

On assure ainsi simplement un positionnement précis du récepteur, notamment pour une constellation de satellites en orbite basse.

EP 0 961 132 A1

## EP 0 961 132 A1

## Description

La présente invention a pour objet un récepteur pour un système de navigation comprenant une constellation de satellites émettant des signaux. L'invention concerne aussi un procédé de localisation d'un récepteur dans un système de navigation comprenant une constellation de satellites émettant des signaux. Elle s'applique notamment aux satellites en orbite basse.

L'invention concerne le domaine des systèmes de navigation par satellites: ces systèmes. à partir d'une constellation de satellites émettant des signaux connus. permettent à un récepteur de calculer sa position dans un repère géocentrique. De tels systèmes sont utilisés pour la navigation des véhicules de toutes natures, et en particulier. pour les bateaux et les aéronefs. Les systèmes existant actuellement sont les systèmes GPS et GLONASS, qui sont constitués de constellations de satellites situés à 20 000 km d'altitude. Ces systèmes sont fondés sur la mesure de pseudo-distances entre les satellites et le récepteur. Cette pseudo-distance est évaluée à partir du temps de transmission d'un signal émis à un instant déterminé par le satellite, et reçu par le récepteur. Pour cela, le récepteur mesure un temps d'arrivée du signal codé émis par un satellite de la constellation, et il lit dans le message reçu le temps d'émission du signal par le satellite. Le récepteur évalue le temps de trajet en déterminant l'instant de réception du message, ou en calculant la phase du signal.

La connaissance de la position des satellites permet de déterminer la position du récepteur, par triangulation à partir des pseudo-distances. Les systèmes existant dans l'art antérieur utilisent quatre satellites pour le calcul de la position du récepteur; on obtient ainsi quatre mesures de pseudo-distances, qui permettent de déterminer le temps et la position de la station du récepteur.

L'une des caractéristiques principales de ces systèmes est que le nombre d'utilisateurs est illimité, i. e. que le système est non saturable; en effet les satellites sont uniquement émetteurs, et le calcul de la position s'effectue au niveau de chaque récepteur. Celui ci est donc passif, en mode "écoute". Ceci implique aussi que les mesures de pseudo distances se font sur un trajet simple satellite-récepteur. D'autres détails sur la structure et le fonctionnement de ces systèmes de navigation se trouvent dans l'art antérieur maintenant cité.

US-A-5 420 592 décrit une utilisation d'un système de navigation GPS pour le positionnement de ballons météorologiques; il est proposé de séparer le récepteur GPS entre une partie mobile portée par le ballon et une partie fixe au sol. Un filtre de Kalman est utilisé pour prévoir la position du ballon et permettre un positionnement même avec une visibilité réduite de la constellation de satellites. Le système corrige les décalages induits par l'effet Doppler sur les signaux des satellites. pour permettre une correction du signal du satellite pour le calcul rapide de la pseudo-distance.

EP-A-0 460 862 décrit un récepteur de système de positionnement global, du type GPS, susceptible d'être implémenté dans un circuit VLSI. Le récepteur comprend des moyens pour évaluer la pseudo distance, et la variation de pseudo-distance. de sorte à supprimer l'effet Doppler sur la porteuse provenant des satellites.

US-A-5 436 632 propose d'utiliser l'effet Doppler pour calculer des corrections à apporter au taux de variation des pseudo-distances. dans un système de surveillance de l'intégrité des signaux d'un système de type GPS.

US-A-5 343 209 propose d'évaluer les décalages Doppler en utilisant une estimation de la vitesse du récepteur et des variations de ligne de vision (LOS pour l'anglais "line of sight") d'un système de positionnement type GPS. Cette évaluation d'obtenir permet une estimation de la phase de la porteuse, de la fréquence de la porteuse et de la modulation de phase de chacun des signaux reçus qui est meilleure que celle que pourrait fournir chaque signal indépendamment.

EP-A-0 518 146 décrit un système de positionnement multi-point, pour un navire et des bouées tractées. Ce système utilise plusieurs récepteurs GPS, et des filtres de Kalman pour obtenir une évaluation de la qualité de chaque information de position. Il est encore proposé de corriger le décalage Doppler pour l'évaluation des pseudo-distances.

US-A-5 594 453 décrit un récepteur GPS avec un mode d'attente, dans lequel la consommation de puissance est réduite; pour permettre une acquisition rapide de la position en sortie du mode d'attente, ce document propose de corriger l'influence de la température sur la fréquence d'horloge. L'effet Doppler est pris en compte pour calculer l'estimation de la fréquence du satellite dans la nouvelle position, en sortie du mode d'attente.

US-A-5 557 284 propose un système de détection d'émission de signaux factices dans un système de positionnement global ("spoofing" en langue anglaise); il est proposé d'utiliser les différences d'effet Doppler entre deux récepteurs placés sur un aéronef ou sur le véhicule pour détecter les signaux factices.

Dans tous ces documents, comme dans l'art antérieur en général, l'effet Doppler sur les signaux des satellites est perçu comme un inconvénient; il est proposé de corriger les signaux reçus pour supprimer l'effet Doppler, ou de tenir compte de l'effet Doppler pour une prévision de la position du récepteur. Aucun de ces documents ne propose d'utiliser les mesures de pseudo-vitesses par effet Doppler pour améliorer la précision de la position déterminée. En outre, ces documents concernent tous des constellations de satellites en orbite moyenne (MEO ou medium earth orbit en langue anglaise), telles que le GPS ou le GLONASS.

L'invention propose au contraire d'utiliser les informations de pseudo-vitesses fournies par l'évaluation de l'effet Doppler pour le calcul de la position du récepteur. Elle s'applique tout particulièrement à une constellation de satellites en orbite basse (LEO ou low earth orbit en langue anglaise), pour lesquels l'effet Doppler et la variabilité géométrique des satellites visibles sont plus importants.

Plus précisément, l'invention propose un récepteur pour un système de navigation comprenant une constellation de satellites émettant des signaux, le récepteur comprenant des moyens de mesure de pseudo-distances entre le récepteur et des satellites à partir des signaux reçus depuis les satellites, des moyens de mesure de pseudo-vitesses entre le récepteur et des satellites à partir des signaux reçus depuis les satellites, et des moyens de calcul de la position instantanée du récepteur à partir de la combinaison des mesures de pseudo-distances et de pseudo-vitesses.

Avantageusement, les moyens de mesure des pseudo-vitesses mesurent les pseudo-vitesses à partir du décalage Doppler des signaux reçus depuis les satellites.

Dans un mode de réalisation, le système comprend en outre des moyens de calcul de la vitesse du récepteur à partir des pseudo-vitesses mesurées.

De préférence, les moyens de calcul calculent la position ou la vitesse du récepteur par une méthode de moindres carrés.

Dans un mode de réalisation, les moyens de calcul calculent la position ou la vitesse du récepteur en minimisant la matrice de covariance des pseudo-distances et des pseudo-vitesses mesurées.

De préférence, les moyens de calcul comprennent en outre des moyens de prédiction de la position du récepteur, par exemple à l'aide de filtres de Kalman.

Avantageusement, la constellation de satellites est une constellation de satellites en orbite basse.

L'invention propose en outre un procédé de localisation d'un récepteur dans un système de navigation comprenant une constellation de satellites émettant des signaux, comprenant les étapes de

- mesure de pseudo-distances entre le récepteur et des satellites à partir des signaux reçus depuis les satellites;
- mesure de pseudo-vitesses entre le récepteur et des satellites à partir des signaux reçus depuis les satellites, et
- calcul de la position du récepteur à partir de la combinaison des mesures de pseudo-distances et de pseudo-vitesses.

Avantageusement, l'étape de mesure des pseudo-vitesses comprend la mesure du décalage Doppler des signaux reçus depuis les satellites, et le calcul des pseudo-vitesses à partir du décalage mesuré.

Dans un mode de mise en oeuvre, l'étape de calcul de la position du récepteur comprend aussi une étape de calcul de la vitesse du récepteur à partir des pseudo-distances et des pseudo-vitesses mesurées.

De préférence, l'étape de calcul comprend le calcul de la position ou de la vitesse du récepteur par une méthode de moindres carrés.

Avantageusement, l'étape de calcul comprend le calcul de la position ou de la vitesse du récepteur en minimisant la matrice de covariance des pseudo-distances et des pseudo-vitesses mesurées.

L'étape de calcul peut aussi comprendre une étape de prédiction de la position du récepteur, par exemple à l'aide de filtres de Kalman.

L'invention concerne enfin l'application d'un tel procédé à la localisation d'un récepteur à l'aide des signaux d'une constellation de satellites en orbite basse.

D'autres caractéristiques et avantages de l'invention apparaîtront à la lecture de la description qui suit de modes de réalisation de l'invention, donnée à titre d'exemple et en référence aux dessins annexés qui montrent:

- figure 1 des courbes de dilution de précision horizontale et verticale dans un système selon l'invention;
- figure 2 une courbe d'erreur de navigation horizontale, dans un système selon l'invention;
- figure 3 une courbe d'erreur de navigation verticale, dans un système selon l'invention.

L'invention propose un système de positionnement global ou système de navigation, dans lequel on utilise les mesures de pseudo-distances, mais aussi des mesures de pseudo-vitesses évaluées par effet Doppler pour calculer la position d'un récepteur. On appelle pseudo-vitesse la vitesse radiale du récepteur par rapport à un satellite. Dans la suite de la présente description, l'invention est décrite en référence à un système de positionnement global utilisant une constellation de satellites en orbite basse (LEO); elle s'applique aussi à des constellations de satellites à des altitudes différentes.

Selon l'invention, les satellites de la constellation sont disposés à une altitude moyenne de 1450 km; par rapport aux systèmes existants, l'altitude plus faible induit une plus grande variabilité géométrique. Cette variabilité est a priori moins favorable pour les applications de navigation, dans lesquelles on utilise classiquement quatre satellites visibles en permanence avec une bonne configuration géométrique. L'invention permet, même dans une telle configuration, d'améliorer une performance de positionnement.

Dans un premier mode de réalisation. l'invention propose d'utiliser les mesures de pseudo-vitesses en instantané, pour améliorer la résolution du positionnement. On peut alors linéariser les équations reliant la position à estimer et les pseudo-distances à mesurer. En outre, on linéarise aussi les équations reliant la position à estimer et les pseudo-vitesses. On peut alors combiner les mesures de pseudo-distance et de pseudo-vitesses dans une même équation linéaire; cette équation peut être résolue au sens des moindres carrés pour obtenir la position du système. De la sorte, les moyens de calcul utilisent dès l'origine les mesures de pseudo-distances et de pseudo-vitesses ; les mesures des pseudo-vitesses sont dès l'origine une variable de la fonction de calcul des positions instantanées, au même titre que les mesures de pseudo-vitesses, à l'inverse de l'art antérieur, où elles n'interviennent que pour la correction de la position calculée auparavant à partir des seules mesures de pseudo-vitesses.

On utilise les notations suivantes:

| | |
|---|---|
| $S^k$ : | satellite numéro k de la constellation; |
| N : | nombre de satellites visibles dans la constellation: |
| $R^k$ : | pseudo-distance entre le récepteur et le satellite $S^k$; |
| c : | vitesse de la lumière: |
| $\rho^k$ : | distance géométrique entre le récepteur et le satellite $S^k$; |
| b : | biais de l'horloge du récepteur par rapport au temps de référence du système de postionnement global; |
| $\varepsilon^k$ : | bruit de mesure sur la pseudo-distance $R^k$; |

$$\left( X_1^{S_k} \ X_2^{S_k} \ X_3^{S_k} \right)^t :$$

| | |
|---|---|
| | coordonnées du satellite $S^k$; |
| $(X_1, X_2, X_3)$: | coordonnées du récepteur (point M); |
| $(X_{1,0}, X_{2,0}, X_{3,0})$: | coordonnées initiales du récepteur (point $M_0$); |

$$\underline{\delta X} = ( X_1 - X_{1,0} \ \ X_2 - X_{2,0} \ \ X_3 - X_{3,0} )^t :$$

| | |
|---|---|
| | coordonnées du vecteur du point $M_0$ au point M; |
| $\underline{u}_0^k$ : | vecteur unitaire du point $M_0$ au satellite $S^k$. |

Pour chaque satellite, on recherche dans le récepteur le maximum de corrélation entre le code de bruit pseudo-aléatoire PN du signal émis par le satellite à un instant donné et le paradigme PN du satellite, stocké dans le récepteur. On peut de façon connue en soi utiliser pour cela une boucle à verrouillage de phase. Cette recherche du maximum de corrélation fournit une différence de temps $\Delta\tau$ et permet d'évaluer la pseudo-distance, par simple produit par la vitesse de la lumière; on peut relier la pseudo-distance à la distance entre le récepteur et le satellite par l'équation:

$$R^k = c.\Delta\tau = \rho^k + c.b + \varepsilon^k \tag{1}$$

On peut linéariser cette équation par rapport aux quatre inconnues que sont la position et le biais de l'horloge, en partant de la position initiale connue $M_0$ du satellite: au premier ordre, on trouve:

$$\delta R^k = R^k - R_0^k = \rho^k - \rho_0^k + c \cdot b + \varepsilon^k$$

$$\delta R^k = \left( \frac{\partial\rho^k}{\partial X_1} \quad \frac{\partial\rho^k}{\partial X_2} \quad \frac{\partial\rho^k}{\partial X_3} \right) \cdot \left( X_1 - X_{1,0} \quad X_2 - X_{2,0} \quad X_3 - X_{3,0} \right)' + c.b + \varepsilon^k$$

$$\delta R^k = \left( \frac{\partial\rho^k}{\partial X_1} \quad \frac{\partial\rho^k}{\partial X_2} \quad \frac{\partial\rho^k}{\partial X_3} \right) \cdot \underline{\delta X}' + c.b + \varepsilon^k$$

Le calcul des dérivées partielles fournit:

$$\frac{\partial \rho^k}{\partial X_i} = \frac{X_i^{S_k} - X_i}{\rho^k}$$

d'où:

$$\left( \frac{\partial \rho^k}{\partial X_1} \quad \frac{\partial \rho^k}{\partial X_2} \quad \frac{\partial \rho^k}{\partial X_3} \right) = -\underline{u_0^{k}}'$$

En considérant tous les N satellites visibles, et en notant $\underline{\delta R}$ le vecteur composé des mesures, en différence par rapport à la postion $M_0$ connue du récepteur

$$\underline{\delta R} = \left( \delta R^1 \ ... \ \delta R^N \right)^t,$$

$$A = \begin{bmatrix} -u_0^{1}{}' & 1 \\ ... & ... \\ -u_0^{N}{}' & 1 \end{bmatrix}$$

et $\underline{Y}$ le vecteur des inconnues,

$$\underline{Y} = \begin{pmatrix} \underline{\delta X} \\ \\ c \cdot b \end{pmatrix}$$

on obtient

$$\underline{\delta R} = A \cdot \underline{Y} + \begin{pmatrix} \varepsilon^1 \\ ... \\ \varepsilon^N \end{pmatrix}$$

On utilise un minimum de quatre satellites visibles pour déterminer quatre pseudo-vitesses et ainsi déterminer les trois inconnues de position et l'inconnu de biais d'horloge. L'équation peut être résolue suivant une méthode des moindres carrés:

$$\underline{\hat{Y}} = \left( A^t \cdot A \right)^{-1} \cdot A^t \cdot \underline{\delta R}$$

Toutefois, l'invention propose d'utiliser non seulement cette simple méthode de positionnement à partir de la mesure des pseudo-distances, mais en outre une mesure des pseudo-vitesses à partir de l'effet Doppler, pour déterminer la position du récepteur. L'observation de l'effet Doppler introduit l'équation suivante:

$$-\frac{\Delta f}{f} = \frac{\dot{\rho}}{c} + \dot{b} + \eta'$$

ou

$$-\lambda.\Delta f = -D = \dot{\rho} + c.\dot{b} + \eta$$

avec les notations suivantes:

$\dot{\rho}$ :      vitesse radiale vraie:

$\dot{b}$ :      dérive de l'horloge du récepteur:

$D$ :      mesure Doppler convertie en distance;

$T_D$ :      temps d'acquisition de la mesure de Doppler:

$D'$ :      $D*T_D$;

$\eta$ :      bruit résiduel de la mesure Doppler:

$\underline{u}^k$ :      vecteur unitaire du récepteur vers le satellite d'indice k:

$\underline{V}^{S_k}$ :      vitesse du satellite $S^k$;

$\underline{V}$ :      vitesse du récepteur.

L'invention propose de linéariser le système en introduisant une position approchée $M_0$ et une vitesse approchée $\underline{V}_0$ du récepteur. On peut alors écrire. pour un satellite $S^k$ donné:

$$- D^k = \left( \underline{V}^{S_k} - \underline{V} \right)^t \cdot \underline{u}^k + c.\dot{b} + \eta^k$$

$$-D^k = \left( \underline{V}^{S_k} - \left( \underline{V}_0 + \delta\underline{V} \right) \right) \cdot \left( \underline{u}_0^k + \left( \frac{\partial \underline{u}^k}{\partial \underline{X}} \right)' \cdot \underline{\delta X} \right) + c \cdot \dot{b} + \eta^k$$

avec

$$\delta\underline{V} = \underline{V} - \underline{V}_0$$

$$\left( \frac{\partial \underline{u}^k}{\partial \underline{X}} \right) = \left( \frac{\partial \underline{u}^k}{\partial X_1} \quad \frac{\partial \underline{u}^k}{\partial X_2} \quad \frac{\partial \underline{u}^k}{\partial X_3} \right)' = \begin{pmatrix} \dfrac{\partial u_1^k}{\partial X_1} & \dfrac{\partial u_2^k}{\partial X_1} & \dfrac{\partial u_3^k}{\partial X_1} \\[2ex] \dfrac{\partial u_1^k}{\partial X_2} & \dfrac{\partial u_2^k}{\partial X_2} & \dfrac{\partial u_3^k}{\partial X_2} \\[2ex] \dfrac{\partial u_1^k}{\partial X_3} & \dfrac{\partial u_2^k}{\partial X_3} & \dfrac{\partial u_3^k}{\partial X_3} \end{pmatrix}$$

Or,

$$\frac{\partial \underline{u}_k}{\partial X_i} = \frac{\partial}{\partial X_j} \left( \frac{MS^k}{\rho^k} \right) \Bigg|_{M=M_0} = \frac{\partial}{\partial X_j} \left( \frac{X^{S_k} - X}{\rho^k} \right)$$

$$\frac{\partial u_j^k}{\partial X_i} = -\frac{\delta_{ij}}{\rho^k} - \frac{X_j^{S_k} - X_j}{\left( \rho^k \right)^2} \cdot \frac{\partial \rho^k}{\partial X_i} = -\frac{\delta_{ij}}{\rho^k} - \frac{X_j^{S_k} - X_j}{\left( \rho^k \right)^2} \cdot \frac{X_i X_i^{S_k}}{\rho^k}$$

$$\frac{\partial u_j^k}{\partial X_i} = -\frac{\delta_{ij}}{\rho^k} + \frac{u_j^k \cdot u_i^k}{\rho^k}$$

d'où

$$\left(\frac{\partial \underline{u}^k}{\partial \underline{X}}\right) = \frac{1}{\rho^k} \cdot \left(\underline{u}^k \cdot \underline{u}^{k'} - I_3\right)$$

En développant cette équation et en négligeant le terme du second ordre $\underline{\delta V}^t \cdot \underline{\delta X}^t$, il vient:

$$\delta D^k = - D^k - \left(\underline{V}^{S_k} - V_0\right)^t \cdot \underline{u}_0^k$$

$$\delta D^k = -\underline{u}_0^{k'} \cdot \underline{\delta V} + \left(\underline{V}^{S_k} - \underline{V}_0\right) \cdot \left(\frac{1}{\rho^k} \cdot \left(\underline{u}^k \cdot \underline{u}^{k'} - I_3\right)\right) \cdot \underline{\delta X} + c \cdot \dot{b} + \eta^k$$

Pour N satellites visibles, cette équation devient

$$\begin{pmatrix} \delta D^1 \\ \cdots \\ \delta D^N \end{pmatrix} = \begin{pmatrix} \left(\underline{V}^{S_1} - \underline{V}_0\right) \cdot \left(\frac{1}{\rho^1} \cdot \left(\underline{u}^1 \cdot \underline{u}^{1'} - I_3\right)\right) & -\underline{u}_0^{1'} & 1 \\ \cdots & \cdots & \cdots \\ \left(\underline{V}^{S_N} - \underline{V}_0\right) \cdot \left(\frac{1}{\rho^N} \cdot \left(\underline{u}^N \cdot \underline{u}^{N'} - I_3\right)\right) & -\underline{u}_0^{N'} & 1 \end{pmatrix} \cdot \begin{pmatrix} \underline{\delta X} \\ \underline{\delta V} \\ c \cdot \dot{b} \end{pmatrix} + \begin{pmatrix} \eta 1 \\ \cdots \\ \eta^N \end{pmatrix}$$

On peut selon l'invention négliger la vitesse radiale du mobile; cette hypothèse est particulièrement acceptables pour les constellations à orbite basse, dans lesquelles les vitesses radiales des satellites sont considérablement plus élevées que les vitesses probables des récepteur.
L'équation précédente devient alors :

$$\underline{\delta D} = \begin{pmatrix} \underline{V}^{S_1'} \cdot \frac{1}{\rho^1} \cdot \left(\underline{u}^1 \cdot \underline{u}^{1'} - I_3\right) & -\underline{u}_0^{1'} & 1 \\ \cdots & \cdots & \cdots \\ \underline{V}^{S_N'} \cdot \frac{1}{\rho^N} \cdot \left(\underline{u}^N \cdot \underline{u}^{N'} - I_3\right) & -\underline{u}_0^{N'} & 1 \end{pmatrix} \cdot \begin{pmatrix} \underline{\delta X} \\ \underline{\delta V} \\ c \cdot \dot{b} \end{pmatrix} + \begin{pmatrix} \eta 1 \\ \cdots \\ \eta^N \end{pmatrix}$$

On combine les mesures de pseudo-distances et de pseudo-vitesses dans la même équation linéaire

$$\begin{pmatrix} \underline{\delta R} \\ \underline{\delta D} \end{pmatrix} = \begin{pmatrix} -\underline{u}_0^{1'} & 0 & 1 & 0 \\ \cdots & \cdots & \cdots & \cdots \\ -\underline{u}_0^{N'} & 0 & 1 & 0 \\ \underline{V}^{S_1'} \cdot \frac{1}{\rho^1} \cdot \left(\underline{u}^1 \cdot \underline{u}^{1'} - I_3\right) & -\underline{u}_0^1 & 0 & 1 \\ \cdots & \cdots & \cdots & \cdots \\ \underline{V}^{S_N'} \cdot \frac{1}{\rho^N} \cdot \left(\underline{u}^N \cdot \underline{u}^{N'} - I_3\right) & -\underline{u}_0^{N'} & 0 & 1 \end{pmatrix} \cdot \begin{pmatrix} \underline{\delta X} \\ \underline{\delta V} \\ c \cdot b \\ c \cdot \dot{b} \end{pmatrix} + \begin{pmatrix} \varepsilon^1 \\ \cdots \\ \varepsilon^N \\ \eta^1 \\ \cdots \\ \eta^N \end{pmatrix}$$

Pour assurer l'homogénéité des inconnues, on peut multiplier certains termes par le temps Td d'acquisition de la mesure des pseudo-vitesses:

$$\begin{pmatrix} \underline{\delta R} \\ \\ \underline{\delta D} \cdot T_D \end{pmatrix} = \begin{pmatrix} -u_0^{1\,t} & & 0 & 1 & 0 \\ \cdots & & \cdots & \cdots & \cdots \\ -u_0^{N\,t} & & 0 & 1 & 0 \\ \underline{V}^{S_1\,t} \cdot T_D / \rho^1 \cdot \left( \underline{u}^1 \cdot \underline{u}^{1\,t} - I_3 \right) & -\underline{u}_0^{1\,t} & 0 & 1 \\ \cdots & \cdots & \cdots & \cdots \\ \underline{V}^{S_N\,t} \cdot T_D / \rho^N \cdot \left( \underline{u}^N \cdot \underline{u}^{N\,t} - I_3 \right) & -\underline{u}_0^{N\,t} & 0 & 1 \end{pmatrix} \cdot \begin{pmatrix} \underline{\delta X} \\ \underline{\delta V} \cdot T_D \\ c \cdot b \\ \lambda \cdot \dot{b} \end{pmatrix} + \begin{pmatrix} \varepsilon^1 \\ \cdots \\ \varepsilon^N \\ \eta^1 \\ \cdots \\ \eta^N \end{pmatrix}$$

On obtient une équation du type $\underline{Z} = A.\underline{Y} + \underline{\varepsilon}$
avec:

$$\underline{Y} = \begin{pmatrix} \underline{\delta X} \\ \underline{\delta V} \cdot T_D \\ c \cdot b \\ \lambda \cdot \dot{b} \end{pmatrix} \qquad \text{et} \quad \underline{Z} = \begin{pmatrix} \underline{\delta R} \\ \\ \underline{\delta D} \cdot T_D \end{pmatrix}$$

Cette équation comprend 8 inconnues pour 2N mesures, et elle peut être résolue en utilisant quatre satellites visibles. Il est clair que si plus de quatre satellites sont visible, on peut utiliser certains pour la mesure de pseudo-distance et d'autres pour la mesure de pseudo-vitesses; toute combinaison des satellites permettant d'obtenir un nombre de mesures suffisant pour résoudre l'équation peut être utilisée.

L'équation est avantageusement résolue au sens des moindres carrés; selon l'invention. pour assurer une solution optimale. on recherche une solution qui minimise la matrice de covariance des mesures de pseudo-vitesses et de pseudo-distances. En notant:

$$\Sigma = \text{cov}(\underline{Z})$$

la matrice de covariance des mesures, on recherche à minimiser

$$\min \left\| \underline{Z} - A \cdot \underline{\hat{Y}} \right\|_{\Sigma^{-1}}$$

La solution est donnée par

$$\underline{\hat{Y}} = \left( A^t \cdot \Sigma^{-1} \cdot A \right)^{-1} \cdot A^t \cdot \Sigma^{-1} \cdot \underline{Z}$$

De la sorte, l'invention ne propose pas simplement une juxtaposition des calculs de pseudo-vitesses et de pseudo-distances. mais bien une utilisation combinée des mesures de pseudo-distance et des mesures de pseudo-vitesses pour calculer la position du récepteur.

L'invention permet d'obtenir une meilleure précision dans la détermination de la position du récepteur. La précision de la localisation peut s'évaluer par le calcul de la covariance de la solution obtenue, qui donne une indication sur la position, la vitesse, et le temps. Cette covariance s'écrit:

$$\text{Cov}(\underline{\hat{Y}}) = \left( A^t \cdot \Sigma^{-1} \cdot A \right)^{-1}$$

Les tableaux suivants montrent les résultats des mesures de pseudo-distances, dans le cas d'un système de navigation utilisant une constellation de satellites en orbite basse. et pour un récepteur disposé à bord d'un avion. On a utilisé pour les tableaux le calcul de la précision à l'aide de la covariance de la solution, suivant l'équation précédente. La première colonne donne les résultats d'un positionnement utilisant simplement les mesures de pseudo-vitesses comme dans les systèmes de l'art antérieur. La deuxième colonne donne les résultats d'un positionnement selon l'invention. Les modes correspondent respectivement à

- mode 0: mode simple ou absolu. monofréquence sans correction différentielle;
- mode 1: mode différentiel local;
- mode 2: mode bifréquence;
- mode 3: mode différentiel local amélioré.

Dans le mode 3, on utilise un corrélateur étroit dans le récepteur; le code est filtré par la phase dans le récepteur de la station différentielle; on utilise aussi avantageusement une correction différentielle sur les pseudo-distances; une correction différentielle sur les pseudo-vitesses pourrait aussi être mise en oeuvre, mais elle n'est pas appliquée pour l'obtention des résultats des tableaux.

| Erreur de navigation horizontale (mètres) | | |
|---|---|---|
| Mode | pseudo-distances | invention |
| mode 0 | 20 | 15 |
| mode 1 | 4,5 | 4 |
| mode 2 | 18 | 11 |
| mode 3 | 1,7 | 1,6 |

La limite supérieure de l'erreur de navigation ou NSE (acronyme de l'anglais "navigation sensor error") pour les système de catégorie 1 est de 18,7 m; l'invention permet d'atteindre cette limite, pour l'ensemble des modes.

| Erreur de navigation verticale (mètres) | | |
|---|---|---|
| Mode | pseudo-distances | invention |
| mode 0 | 46 | 15 |
| mode 1 | 11 | 7.3 |
| mode 2 | 41 | 9,7 |
| mode 3 | 4,2 | 3,8 |

La limite supérieure de l'erreur de navigation ou NSE pour les système de catégorie 1 est de 5.4 m; l'invention permet d'atteindre cette limite, au moins pour le mode 3.

Dans tous les cas, l'invention permet d'améliorer significativement les résultats d'un positionnement classique obtenu par les seules mesures de pseudo-distances.

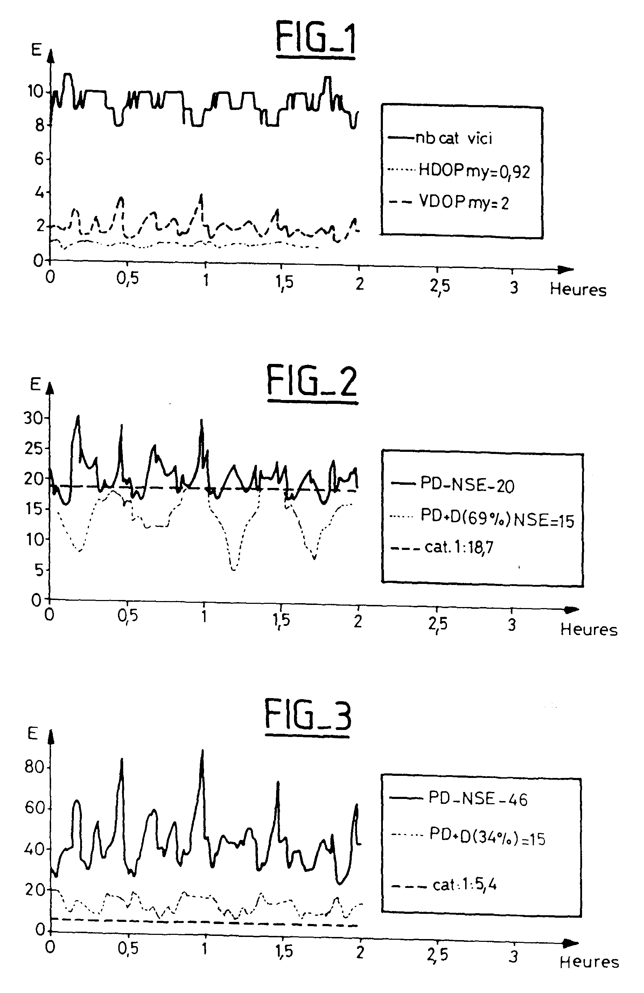

Ces résultats apparaissent aussi dans les figures 1 à 3, qui sont des représentations graphiques de simulations de l'évolution dans le temps des NSE, pour le mode 0. et pour une constellation de satellites en orbite basse. La figure 1 sans dimension en ordonnées, et en heures en abscisses. Elle montre en trait pleins le nombre de satellites visibles. en trait interrompu longs la dilution de précision horizontale, et en traits interrompus courts la dilution de précision verticale. La dilution de précision horizontale présente une valeur moyenne de 0.92, tandis que la dilution de précision verticale présente une valeur moyenne de 2.

La figure 2 montre les valeurs de l'erreur de navigation, pour les mêmes simulations que celles des tableaux. Les ordonnées sont graduées en mètres, tandis que les abscisses sont encore en heures. Le trait interrompu horizontal à la valeur de 18.7 mètres correspond à la limite de la catégorie 1. Le trait plein montre l'erreur de navigation dans un système classique, où la position est évaluée uniquement par un calcul de pseudo-distance: comme indiqué dans le tableau ci-dessus, la moyenne de l'erreur de navigation est de l'ordre de 20 mètres. et est supérieure à la limite de la catégorie 1. Le trait pointillés montre l'erreur de navigation dans le récepteur de l'invention, qui présente une moyenne de 15 mètres. On constate en outre que l'erreur de navigation selon l'invention présente une excursion relativement faible, et reste toujours inférieure au seuil limite de la catégorie 1.

La figure 3 montre avec les mêmes notations les résultats correspondant pour l'erreur verticale. La limite de la catégorie 1 est de 5,4 mètres, et les valeurs moyennes selon l'invention et selon la méthode classique sont respectivement de 46 et 15 mètres.

On constate encore sur les figures que l'invention permet d'obtenir de meilleurs résultats. non seulement en valeur moyenne, mais à tout instant.

Dans un autre mode de réalisation, l'invention propose en outre d'utiliser un modèle dynamique pour la détermination des coordonnées du récepteur. à partir des mesures de position et de vitesses. On peut notamment utiliser à cet effet un filtrage de Kalman pour prédire la position du récepteur.

Le filtre de Kalman utilisé fonctionne avec un vecteur d'état $E_n$ :

$$E_n = (X, V, A, u)^t$$

où X est la position du récepteur, V sa vitesse, A l'accélération, et u le bruit à l'instant n. On note $P_0$ la matrice de covariance de $E_0$ à l'instant initial. ou dans la position $M_0$, avec la vitesse $V_0$ et l'accélération $A_0$, et $P_n$ la matrice de covariance de $E_n$.

L'équation du modèle dynamique est la suivante:

$$E_{n+1} = F. E_n + w_1$$

où n est l'indice de l'instant, $w_1$ est un terme d'erreur du modèle, dépendant du bruit. qui est supposé être un bruit blanc gaussien, et F est la matrice de propagation associée au filtre de Kalman.

On note Q la covariance de $w_1$.

$$Q = cov(w_1) = \begin{pmatrix} 0_3 & & & \\ & 0_3 & & \\ & & 0_3 & \\ & & & \sigma^2 \cdot I_3 \end{pmatrix}$$

Dans cette expression, $\sigma$ est le facteur d'innovation, qui caractérise la confiance que l'on place dans le modèle de propagation, et qui permet un réglage du filtre.

La matrice de propagation F s'écrit:

$$F = \begin{pmatrix} I_3 & \Delta t \cdot I_3 & \frac{\Delta t^2}{2} \cdot I_3 & \frac{\Delta t^3}{6} \cdot I_3 \\ & I_3 & \Delta t \cdot I_3 & \frac{\Delta t^2}{2} \cdot I_3 \\ & & I_3 & \Delta t \cdot I_3 \\ & & & 0_3 \end{pmatrix}$$

L'équation de mesure s'écrit

$$Y = H.E + w_2$$

où, comme dans le mode de réalisation précédent, Y est la matrice des inconnues, E est le vecteur d'état estimé par le filtrage de Kalman, H est la matrice de mesure définie plus bas, et $w_2$ est le bruit de mesure, soit l'erreur de positionnement. La matrice de bruit R, qui est égale à la covariance de ce bruit de mesure est donnée par l'étape de positionnement décrit dans le mode de réalisation précédent. Ainsi, dans ce mode de réalisation comme dans le précédent, on utilise la matrice de covariance des positions et des vitesses, et on utilise cette matrice de covariance pour le calcul de la position approchée servant d'entrée au modèle dynamique.

A chaque instant de mesure, le filtrage de Kalman se compose de deux étapes. une étape de prédiction - passage de $E_n$ à une valeur estimée de $E_{n+1}$ - et une étape de correction de cette valeur extimée. On peut utiliser le filtrage suivant:

$$E_{n+1} = F.E_n$$

et

$$P_{n+1} = F.P_n.F^t + Q$$

pour l'étape de prédiction: et

$$K = P_{n+1}.H^t.\Sigma^{-1},$$

qui traduit le gain de Kalman,

$$\Sigma = R + H.P.H^t,$$

H étant définie plus bas

$$E_{n+1} = E_{n+1} + K.(Y_{n+1} - H.E_{n+1})$$

$$P_{n+1} = (1 - K.H).P_{n+1}$$

pour l'étape de correction de la prédiction.

$P_0$ s'écrit

$$P_0 = \begin{pmatrix} R_0 & & & \\ & R_v & & \\ & & R_a & \\ & & & 0_3 \end{pmatrix}$$

$R_0$ étant la matrice des covariances des mesures de position et de vitesse, $R_a$ est choisie comme

$$R_a = \begin{pmatrix} 0.1^2 & & \\ & 0.1^2 & \\ & & 0.1^2 \end{pmatrix} \text{ en. } (m/s^2)^2.$$

On peut prendre pour l'état initial $E_0$ la position et la vitesse calculées, et une valeur approchée de l'accélération. La matrice de mesure H s'écrit

$$H = \begin{pmatrix} I_3 & O_3 & O_3 & O_3 \\ O_3 & I_3 & O_3 & O_3 \end{pmatrix}$$

On procède ainsi, à chaque instant, à une mesure des pseudo-distances et des pseudo-vitesses, puis ensuite à un calcul de la position et de la vitesse approchées à partir de ces mesures. On peut utiliser comme dans le premier mode de réalisation une méthode de moindre carrés itératifs, en minimisant les erreurs.

La position et la vitesse approchés sont utilisée en entrée du modèle dynamique pour obtenir une prédiction du vecteur d'état du récepteur. Cette prédiction est corrigée pour fournir une estimation de la vitesse et de la position du récepteur.

L'invention permet encore dans ce cas d'améliorer la précision dans le positionnement, comme le montrent les tableaux suivants, toujours dans le cas d'une constellation de satellites en orbite basse. Les notations sont les mêmes que dans le mode de réalisation précédent; on a en outre, pour le cas du positionnement par calcul uniquement des pseudo-distances, mentionné les résultats avec ou sans filtrage de Kalman: pour le positionnement selon l'invention, on a aussi indiqué les résultats avec ou sans utilisation du modèle dynamique.

| Erreur de navigation horizontale (mètres) | | | | |
|---|---|---|---|---|
| Mode | pseudo-distances | | invention | |
| | sans filtrage | avec filtrage | sans filtrage | avec filtrage |
| mode 0 | 24 | 24 | 9,8 | 2,8 |
| mode 1 | 4,4 | 3,2 | 3,8 | 1,9 |
| mode 3 | 1,8 | 1,4 | 1,7 | 1,3 |

| Erreur de navigation verticale (mètres) | | | | |
|---|---|---|---|---|
| Mode | pseudo-distances | | invention | |
| | sans filtrage | avec filtrage | sans filtrage | avec filtrage |
| mode 0 | 32 | 32 | 11,4 | 4.2 |
| mode 1 | 12 | 7,4 | 7,8 | 5,6 |
| mode 3 | 4,6 | 3,6 | 4 | 2,4 |

De nouveau, les tableaux montrent que l'invention permet d'obtenir des résultats plus précis que l'art antérieur utilisant simplement des pseudo-distances. Le mode de réalisation de l'invention utilisant un modèle dynamique pour prédire la position du récepteur permet encore d'améliorer les résultats obtenus. Par rapport aux limites de la catégorie 1 de systèmes de navigation, l'invention permet d'atteindre dans les modes 0, 1 et 3 la catégorie 1, en erreur horizontale; elle permet encore, dans ce deuxième mode de réalisation, d'atteindre cette catégorie pour l'erreur verticale, très facilement pour le mode 3, et de façon marginale pour les modes 0 et 1.

Ce deuxième mode de réalisation permet donc d'obtenir un positionnement plus précis, toujours en utilisant à la fois les mesures de pseudo-distances et les mesures de pseudo-vitesses pour la détermination de la position.

Rien entendu, la présente invention n'est pas limitée aux exemples et modes de réalisation décrits et représentés, mais elle est susceptible de nombreuses variantes accessibles à l'homme de l'art. On pourrait ainsi utiliser des satellites différents pour les différentes mesures, si plus de quatre satellites sont visibles. Il est aussi clair que l'invention n'est pas limitée au mode de réalisation préféré d'une constellation en orbite basse, même si c'est pour ce type d'orbite que les variations de pseudo-vitesses mesurées par le décalage Doppler sont les plus importantes.

**Revendications**

1.  Récepteur pour un système de navigation comprenant une constellation de satellites émettant des signaux, le récepteur comprenant des moyens de mesure de pseudo-distances entre le récepteur et des satellites à partir des signaux reçus depuis les satellites. des moyens de mesure de pseudo-vitesses entre le récepteur et des satellites à partir des signaux reçus depuis les satellites, et des moyens de calcul de la position instantanée du récepteur à partir de la combinaison des mesures de pseudo-distances et de pseudo-vitesses.

2.  Système selon la revendication 1, caractérisé en ce que les moyens de mesure des pseudo-vitesses mesurent les pseudo-vitesses à partir du décalage Doppler des signaux reçus depuis les satellites.

3.  Système selon la revendication 1 ou 2, caractérisé en ce qu'il comprend en outre des moyens de calcul de la vitesse du récepteur à partir des pseudo-vitesses mesurées.

4.  Récepteur selon la revendication 1, 2 ou 3, caractérisé en ce que les moyens de calcul calculent la position ou la vitesse du récepteur par une méthode de moindres carrés.

5.  Récepteur selon l'une des revendications 1 à 4, caractérisé en ce que les moyens de calcul calculent la position ou la vitesse du récepteur en minimisant la matrice de covariance des pseudo-distances et des pseudo-vitesses mesurées.

6.  Récepteur selon l'une des revendications 1 à 5, caractérisé en ce que les moyens de calcul comprennent en outre des moyens de prédiction de la position du récepteur, par exemple à l'aide de filtres de Kalman.

7.  Récepteur selon l'une des revendications 1 à 6, caractérisé en ce que la constellation de satellites est une constellation de satellites en orbite basse.

8.  Procédé de localisation d'un récepteur dans un système de navigation comprenant une constellation de satellites émettant des signaux, comprenant les étapes de

    -   mesure de pseudo-distances entre le récepteur et des satellites à partir des signaux reçus depuis les satellites;
    -   mesure de pseudo-vitesses entre le récepteur et des satellites à partir des signaux reçus depuis les satellites, et
    -   calcul de la position du récepteur à partir de la combinaison des mesures de pseudo-distances et de pseudo-vitesses.

9.  Procédé selon la revendication 8, caractérisé en ce que l'étape de mesure des pseudo-vitesses comprend la mesure du décalage Doppler des signaux reçus depuis les satellites, et le calcul des pseudo-vitesses à partir du décalage mesuré.

10. Procédé selon la revendication 8 ou 9, caractérisé en ce que l'étape de calcul de la position du récepteur comprend aussi une étape de calcul de la vitesse du récepteur à partir des pseudo-distances et des pseudo-vitesses mesurées.

11. Procédé selon la revendication 8, 9 ou 10, caractérisé en ce que l'étape de calcul comprend le calcul de la position ou de la vitesse du récepteur par une méthode de moindres carrés.

12. Procédé selon l'une des revendications 8 à 11, caractérisé en ce que l'étape de calcul comprend le calcul de la position ou de la vitesse du récepteur en minimisant la matrice de covariance des pseudo-distances et des pseudo-vitesses mesurées.

13. Procédé selon l'une des revendications 8 à 12, caractérisé en ce que l'étape de calcul comprend une étape de prédiction de la position du récepteur, par exemple à l'aide de filtres de Kalman.

14. Application du procédé selon l'une des revendications 8 à 13 à la localisation d'un récepteur à l'aide des signaux d'une constellation de satellites en orbite basse.

FIG_1

FIG_2

FIG_3

**Office européen des brevets**

**RAPPORT DE RECHERCHE EUROPEENNE**

Numéro de la demande

EP 99 40 1211

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | EP 0 513 349 A (NII KOSM PRIBOROSTROENIA) 19 novembre 1992 (1992-11-19) * colonne 22, ligne 54 - colonne 24, ligne 42 * | 1-3,8-10 | G01S5/14 G01S5/12 |
| X | WO 98 14797 A (QUALCOMM INC) 9 avril 1998 (1998-04-09) | 1,2,4, 7-9,11, 14 | |
| A | * abrégé * * page 21, ligne 30 - page 23, ligne 36 * * page 25, ligne 6 - page 27, ligne 27 * * page 33, ligne 22 - page 37, ligne 29 * | 5,12 | |
| X | FR 2 741 761 A (CENTRE NAT ETD SPATIALES) 30 mai 1997 (1997-05-30) | 1,3,4,6, 8,10,11, 13 | |
| Y | * page 2, ligne 16 - page 4, ligne 32 * | 5,12 | |
| X | US 5 416 712 A (GEIER GEORGE J ET AL) 16 mai 1995 (1995-05-16) | 1-4,8-11 | |
| A | * colonne 4, ligne 21 - ligne 60 * * colonne 15, ligne 56 - ligne 60 * * colonne 24, ligne 29 - ligne 38 * * colonne 2, ligne 30 - ligne 56 * | 5,6,12, 13 | DOMAINES TECHNIQUES RECHERCHES (Int.Cl.6) G01S |
| P,X | US 5 883 595 A (COLLEY JAIME B) 16 mars 1999 (1999-03-16) * colonne 3, ligne 56 - colonne 4, ligne 46 * * figures 1,2 * | 1,3,6,8, 10,13 | |
| Y,D | US 5 420 592 A (JOHNSON RUSSELL K) 30 mai 1995 (1995-05-30) | 5,12 | |
| A | * colonne 7, ligne 34 - ligne 68 * * colonne 19, ligne 59 - colonne 20, ligne 63 * | 1,8 | |

-/--

Le présent rapport a été établi pour toutes les revendications

| Lieu de la recherche | Date d'achèvement de la recherche | Examinateur |
|---|---|---|
| LA HAYE | 20 août 1999 | Roost, J |

Office européen
des brevets

**RAPPORT DE RECHERCHE EUROPEENNE**

Numéro de la demande

EP 99 40 1211

## DOCUMENTS CONSIDERES COMME PERTINENTS

| Catégorie | Citation du document avec indication, en cas de besoin, des parties pertinentes | Revendication concernée | CLASSEMENT DE LA DEMANDE (int.Cl.6) |
|---|---|---|---|
| A | EP 0 283 353 A (LMT RADIO PROFESSIONELLE) 21 septembre 1988 (1988-09-21) * colonne 6, ligne 61 - colonne 7, ligne 6 * | 1,8 | |

DOMAINES TECHNIQUES RECHERCHES (Int.Cl.6)

Le présent rapport a été établi pour toutes les revendications

| Lieu de la recherche | Date d'achèvement de la recherche | Examinateur |
|---|---|---|
| LA HAYE | 20 août 1999 | Roost, J |

## ANNEXE AU RAPPORT DE RECHERCHE EUROPEENNE
## RELATIF A LA DEMANDE DE BREVET EUROPEEN NO.

EP 99 40 1211

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés a titre indicatif et n'engagent pas la responsabilité de l'Office européen des brevets.

20-08-1999

| Document brevet cité au rapport de recherche | | Date de publication | Membre(s) de la famille de brevet(s) | | | Date de publication |
|---|---|---|---|---|---|---|
| EP 0513349 | A | 19-11-1992 | WO | 9111732 | A | 08-08-1991 |
| | | | DE | 69029201 | D | 02-01-1997 |
| | | | DE | 69029201 | T | 17-04-1997 |
| | | | US | 5331329 | A | 19-07-1994 |
| WO 9814797 | A | 09-04-1998 | AU | 4654297 | A | 24-04-1998 |
| | | | EP | 0929822 | A | 21-07-1999 |
| FR 2741761 | A | 30-05-1997 | BR | 9606798 | A | 30-12-1997 |
| | | | CA | 2211340 | A | 05-06-1997 |
| | | | EP | 0805988 | A | 12-11-1997 |
| | | | WO | 9720227 | A | 05-06-1997 |
| | | | JP | 11500231 | T | 06-01-1999 |
| US 5416712 | A | 16-05-1995 | EP | 0653074 | A | 17-05-1995 |
| | | | JP | 7509570 | T | 19-10-1995 |
| | | | WO | 9428435 | A | 08-12-1994 |
| US 5883595 | A | 16-03-1999 | AUCUN | | | |
| US 5420592 | A | 30-05-1995 | AUCUN | | | |
| EP 0283353 | A | 21-09-1988 | FR | 2611399 | A | 02-09-1988 |
| | | | CA | 1297972 | A | 24-03-1992 |
| | | | DE | 3881557 | A | 15-07-1993 |
| | | | US | 4894655 | A | 16-01-1990 |

EPO FORM P0-60

Pour tout renseignement concernant cette annexe : voir Journal Officiel de l'Office européen des brevets. No.12/82